# FASCICULE DE BREVET EUROPEEN

(11) **EP 2 436 917 B1**
(45) Date de publication et mention de la délivrance du brevet: **07.05.2014**
(21) Numéro de dépôt: 11183231.7
(22) Date de dépôt: 29.09.2011
(51) Int. Cl.: F03B 3/18, F03B 17/06

(54) **Poutre de supportage d'un carénage d'hydrolienne et hydrolienne comportant une telle poutre**
Träger für eine Verkleidung eines Wellenkraftwerks und Wellenkraftwerk, das einen solchen Träger enthält
Beam for supporting a wind turbine fairing and wind turbine comprising such a beam

(30) Priorité: 30.09.2010 FR 1057907
(43) Date de publication de la demande: 04.04.2012
(73) Titulaire: ALSTOM Renewable Technologies, 38100 Grenoble (FR)
(72) Inventeur: Pot, Nicolas, 38100 Grenoble (FR); Thouvenin, Thibault, 37000 Tours (FR)
(74) Mandataire: Pesce, Michele

(56) Documents cités:
- WO-A1-2006/029496
- WO-A1-2009/126996
- US-A- 4 613 279
- US-A1- 2008 265 583

## Description

La présente invention concerne une poutre de supportage d'un carénage d'hydrolienne ainsi qu'une hydrolienne comportant une telle poutre.

Une roue d'hydrolienne, telle que connue par exemple du document WO-A-2009/126996, comprend un moyeu central présentant une géométrie de révolution autour de l'axe de rotation de la roue, et des pales solidaires du moyeu qui s'étendent radialement vers l'extérieur à partir du moyeu. L'hydrolienne peut être munie d'un carénage fixe externe qui entoure sa roue et qui présente une géométrie de révolution autour de l'axe de rotation de la roue. Le carénage définit un volume cylindrique creux à l'intérieur duquel s'étendent les pales et le moyeu. Des poutres de supportage connues sont utilisées pour assembler le carénage à un support fixe qui entoure le moyeu. Ces poutres ont généralement une section rectangulaire dont les bords de grandes dimensions sont parallèles au flux d'eau qui traverse les pales lorsque l'hydrolienne fonctionne.

En fonctionnement, l'eau longe les poutres au niveau de leurs côtés correspondant aux bords de grandes dimensions de leur section transversale. Des tourbillons de Karman ont tendance à se former en aval de la poutre et provoquent des contraintes mécaniques dans la poutre qui peuvent donner naissance à des fissures, ce qui n'est pas satisfaisant.

C'est à ces inconvénients qu'entend plus particulièrement remédier l'invention en proposant une poutre de supportage dont la géométrie permet, lorsque la poutre est soumise à un flux d'eau lors du fonctionnement d'une hydrolienne, de limiter, voire d'empêcher, la formation de tourbillons de Karman.

A cet effet, l'invention concerne une poutre de supportage d'un carénage d'hydrolienne présentant une section, prise perpendiculairement à un axe longitudinal de la poutre, en forme de parallélogramme. La poutre comprend au moins une fente qui s'étend globalement parallèlement à l'axe longitudinal de la poutre. Dans une section prise perpendiculairement à l'axe longitudinal de la poutre, les traces des surfaces qui bordent la fente s'étendent à partir d'un des côtés de grandes dimensions de la section jusqu'à un côté adjacent de petites dimensions de la section.

Grâce à l'invention, l'eau peut s'écouler dans la fente, ce qui stabilise l'écoulement de l'eau le long de la poutre et évite la formation de tourbillons de Karman en aval de la poutre.

Selon des aspects avantageux mais non obligatoires de l'invention, une telle poutre de supportage peut incorporer une ou plusieurs des caractéristiques suivantes, prises dans toute combinaison techniquement admissible :
- Le côté de petites dimensions de la section forme un angle aigu avec le côté adjacent de grandes dimensions de la section.
- Dans un plan perpendiculaire à l'axe longitudinal de la poutre, un angle situé à l'extérieur de la poutre, du côté d'une arête de jonction entre le côté de petites dimensions de la section et le côté de grandes dimensions de la section par rapport à la fente, et défini entre, d'une part, une portion du côté de grandes dimensions, située du côté de l'arête par rapport à la fente, et, d'autre part, un axe médian ou moyen de la fente, est supérieur à 90 °.
- Dans un plan perpendiculaire à l'axe longitudinal de la poutre, l'angle situé à l'extérieur de la poutre est supérieur à 120°, de préférence compris entre 130° et 160°, de préférence encore de l'ordre de 150°.
- Dans un plan perpendiculaire à l'axe longitudinal de poutre, un angle, situé à l'intérieur de la poutre, et délimité par un côté de grandes dimensions du parallélogramme et par un côté de petites dimensions du parallélogramme qui forme un angle obtus avec le côté de grandes dimensions, est supérieur à 90°, de préférence supérieur à 120°, de préférence encore de l'ordre de 150°.
- Au moins deux fentes (s'étendent à partir d'un même côté de grandes dimensions du parallélogramme.
- Les fentes qui s'étendent à partir d'un même côté de grandes dimensions du parallélogramme sont parallèles.
- Au moins une fente s'étend à partir de chaque côté de grandes dimensions.
- La poutre est équipée de moyens de fixation pour l'assemblage de deux parties de la poutre situées de part et d'autre d'une même fente.
- Au moins une partie de la poutre, située du côté d'une arête de jonction entre le côté de petites dimensions de la section et le côté de grandes dimensions de la section par rapport à la fente, est composée d'un matériau présentant une résistance mécanique supérieure à celle d'un matériau qui compose une partie de la poutre située à l'opposé de l'arête par rapport à la fente.

L'invention concerne également une hydrolienne comportant une roue mobile en rotation autour d'un axe, un carénage fixe qui entoure la roue et au moins une poutre de supportage du carénage selon l'invention, qui relie le carénage à un support central de l'hydrolienne.

L'invention sera mieux comprise et d'autres avantages de celle-ci apparaîtront plus clairement à la lumière de la description qui va suivre d'une hydrolienne et d'une poutre de supportage d'un carénage conformes à l'invention, donnée uniquement à titre d'exemple et faite en référence aux dessins annexés dans lesquels :
- la figure 1 est une vue en perspective d'une hydrolienne comportant trois poutres de supportage conformes à l'invention ;
- la figure 2 est une coupe à plus grande échelle, selon le plan Il à la figure 1;
- la figure 3 est une coupe, à plus grande échelle, selon la ligne III-III à la figure 2;
- la figure 4 est une vue, à plus grande échelle, du détail IV à la figure 3;
- la figure 5 est une vue, à plus grande échelle, du détail V à la figure 3;
- la figure 6 est une vue, semblable à la figure 4, pour un deuxième mode de réalisation de l'invention ; et
- la figure 7 est une vue, semblable à la figure 4, pour un troisième mode de réalisation de l'invention.

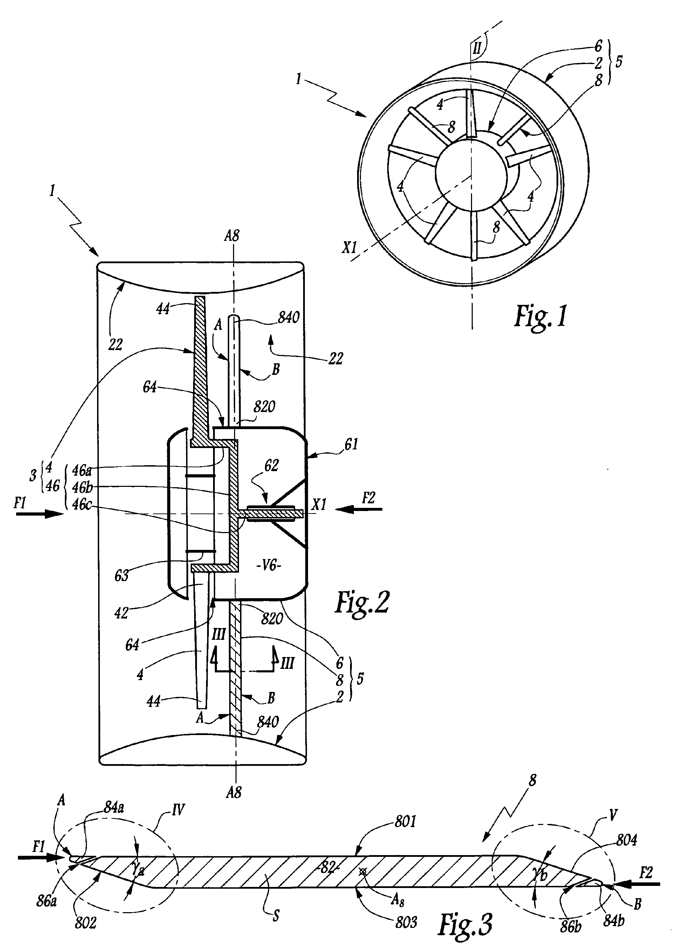

Les figures 1 et 2 montrent une hydrolienne 1 d'axe X1 comprenant un carénage externe 2, une roue 3, cinq pales 4, un support fixe et central 6 et trois poutres de supportage 8.

Dans la suite de la description, le terme « axial » qualifie une direction parallèle à l'axe X1, et le terme « radial » qualifie une direction perpendiculaire à l'axe X1 et sécante avec celui-ci, ou une surface perpendiculaire à une direction radiale. Par ailleurs, un élément qualifié de proximal est situé plus proche de l'axe X1 qu'un élément qualifié de distal.

Comme le montre plus particulièrement la figure 2, le carénage 2 est creux et est de forme annulaire d'axe X1 et le support central 6 est un cylindre à base circulaire d'axe X1 comportant une enveloppe externe 61. Les poutres de supportage 8 s'étendent radialement, chacune selon son axe longitudinal A8, et relient le support 6 au carénage 2. Les extrémités proximales 820 des poutres 8 sont fixées à une surface radiale externe 64 de l'enveloppe 61 et les extrémités distales 840 des poutres 8 sont fixées à une surface radiale interne 22 du carénage 2. La surface radiale externe 65 comporte une rainure annulaire 64 pour le passage des pales 4. Des moyens de fixation 63 relient les parties du support 6 situées de part et d'autres de la rainure 64. Le carénage 2, les poutres 8 et le support 6 sont solidaires et constituent une partie 5 de l'hydrolienne 1 qui est fixe lorsque l'hydrolienne 1 fonctionne.

Les pales 4 s'étendent radialement et ont leurs extrémités proximales 42 fixées à une portion cylindrique 46a à base circulaire d'un moyeu 46 situé à l'intérieur de l'enveloppe externe 61 du support 6. Une portion 46b du moyeu 46, en forme de disque d'axe X1, est reliée à la portion 46a et à une portion 46c du moyeu 46 qui a la géométrie d'une tige d'axe X1. La portion 46c du moyeu 46 est guidée en rotation par un palier 62 appartenant au support 6. Le moyeu 46 entraîne en rotation l'arbre d'entrée d'un alternateur non représenté. Les extrémités distales 44 des pales 4 affleurent la surface radiale interne 22 du carénage 2. Les pales 4 et le moyeu 46 constituent ensemble la roue 3 de l'hydrolienne 1 qui est mobile en rotation autour de l'axe X1 par rapport à la partie fixe 5.

En fonctionnement, un flux d'eau F1 ou F2, globalement parallèle à l'axe X1 traverse l'hydrolienne 1 dans un sens ou dans l'autre.

Comme le montre la figure 3, les poutres 8 sont des prismes dont la section S, prise perpendiculairement à leurs axes longitudinaux A8, est globalement en forme d'un parallélogramme qui comporte deux côtés 801 et 803 de grandes dimensions parallèles à l'axe X1 et deux côtés 802 et 804 de petites dimensions. Un angle aigu γa, situé à l'intérieur du parallélogramme, est délimité entre les côtés 801 et 802, et un angle aigu γb, situé à l'intérieur du parallélogramme, est délimité entre les côtés 803 et 804. Les angles γa et γb sont égaux. Ceci n'est toutefois pas obligatoire.

La jonction des côtés 801 et 802 constitue une première arête A de la poutre 8 et la jonction des côtés 803 et 804 constitue une deuxième arête B du parallélogramme. Les arêtes A et B sont arrondies.

Un bord d'attaque d'une poutre 8 est l'arête A ou B de la poutre 8 avec laquelle le flux F1 ou F2 entre en premier en contact et un bord de fuite d'une poutre 8 est, dans le sens d'écoulement du flux F1 ou F2, l'arête A ou B située en aval, c'est-à-dire du côté vers lequel s'écoule le flux F1 ou F2, par rapport au bord d'attaque.

Ainsi, pour le flux F1, l'arête A constitue un bord d'attaque de la poutre 8 et l'arête B constitue un bord de fuite de la poutre 8, et, pour le flux F2, l'arête B constitue un bord d'attaque de la poutre 8 et l'arête A constitue un bord de fuite de la poutre 8.

Les poutres 8 comportent chacune un élément principal 82, situé à l'opposé des arêtes A et B par rapport aux fentes 86a et 86b, et deux appendices 84a et 84b situés respectivement du côté de l'arête A ou de l'arête B par rapport aux fentes 86a ou 86b. Un espace résiduel s'étendant entre l'élément principal 82 et l'appendice 84a forme une fente 86a, et un espace résiduel s'étendant entre l'élément principal 82 et l'appendice 84b forme une fente 86b. Les appendices 84a et 84b sont assemblés avec l'élément principal 82. Cet assemblage peut être effectué, par exemple, par soudage d'éléments non représentés, répartis entre l'extrémité proximale 820 et l'extrémité distale 840 de la poutre 8, et qui relient l'élément principal 82 aux appendices 84a et 84b. D'autres moyens de fixation peuvent être, par exemple, des vis qui coopèrent avec des trous taraudés ménagés dans l'élément principal 82 et dans les appendices 84a et 84b.

Les fentes 86a et 86b, les appendices 84a et 84b et l'élément principal 82 s'étendent depuis l'extrémité proximale 820 jusqu'à l'extrémité distale 840 de chaque poutre 8.

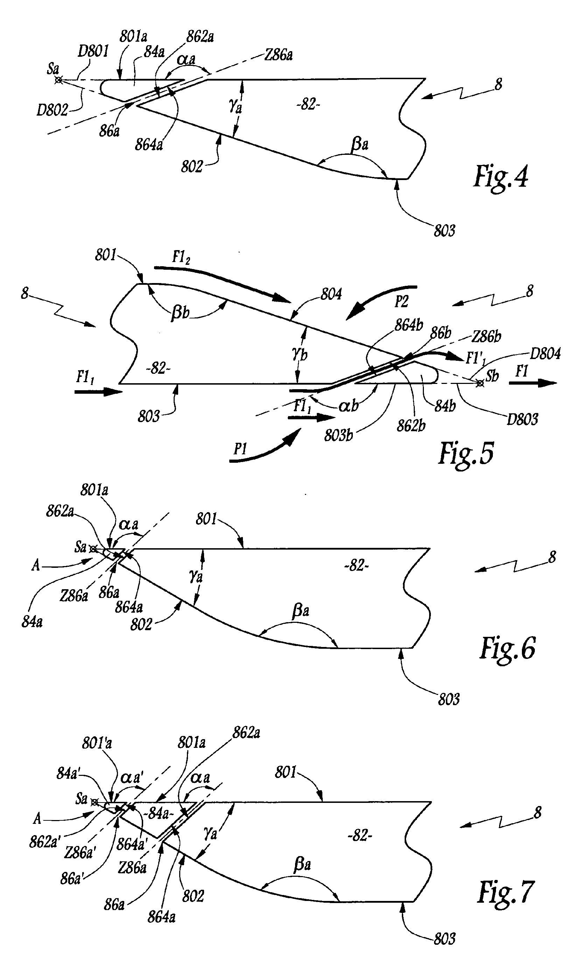

Comme le montre la figure 4, la fente 86a s'étend selon un axe médian Z86a. On définit un angle αa, environ égal à 150°, entre, d'une part, une portion 801a du côté 801 appartenant à l'appendice 84a, et, d'autre part, une portion de l'axe Z86a qui s'étend à l'extérieur de la poutre 8, au-delà du côté 801, c'est-à-dire du côté de l'arête A. L'angle αa est situé à l'extérieur de la poutre 8, du côté de l'arête A de jonction entre le côté de petites dimensions 802 de la section S et le côté de grandes dimensions 801 de la section S par rapport à la fente 86a. L'angle αa est supérieur à 90°. De préférence, l'angle αa est supérieur à 120° et est compris entre 130° et 160°. De préférence, l'angle αa est environ égal à 150°.

Le côté 803 forme avec le côté 802 un angle βa environ égal à 150° situé du côté de la poutre 8. L'angle βa est supérieur à 90°, de préférence supérieur à 120°. De préférence, l'angle βa est environ égal à 150°.

Les angles αa et βa peuvent avoir la même valeur. Ce n'est toutefois pas obligatoire.

On définit un sommet Sa de l'angle aigu γa au point d'intersection de droites D801 et D802, représentées en pointillés, selon lesquelles s'étendent respectivement les côtés 801 et 802 du parallélogramme de la figure 3.

On note 862a une surface de l'élément principal 82 qui borde la fente 86a. On note 864a une surface de l'appendice 84a qui borde la fente 86a. Ainsi, la fente 86a est située entre les surfaces 862a et 864a. Plus précisément, dans une section prise perpendiculairement à l'axe A8 longitudinal de la poutre 8, les traces des surfaces 862a et 864a qui bordent la fente 86a s'étendent à partir du côté 801 de grandes dimensions de la section S et jusqu'au côté adjacent 802 de petites dimensions de la section S. On entend par trace de la surface 862a ou 864a le segment situé à l'intersection de la section S et de la surface 862a ou 864a. De plus, le côté de petites dimensions 802 de la section S forme un angle aigu γa avec le côté de grandes dimensions 801 de la section S.

La géométrie de l'extrémité de la poutre 8 située du côté de l'arête A peut être transposée du côté de l'arête B en effectuant une symétrie centrale autour du point d'intersection des diagonales du parallélogramme représenté à la figure 3.

La figure 5 montre plus en détail l'extrémité de la poutre 8 située du côté de l'arête B. La fente 86b s'étend selon un axe médian Z86b. On définit un angle αb, situé à l'extérieur de la poutre 8, du côté de l'arête B par rapport à la fente 86b, entre, d'une part, une portion 803b du côté 803 appartenant à l'appendice 84b, et, d'autre part, une portion de l'axe 86b qui s'étend à l'extérieur de la poutre 8 au-delà du côté 803. L'angle αb est situé à l'extérieur de la poutre 8, du côté de l'arête B de jonction entre le côté de petites dimensions 804 de la section S et le côté de grandes dimensions 803 de la section S par rapport à la fente 86b.

On définit un angle βb, situé à l'intérieur de la poutre 8, entre les côtés 801 et 804 du parallélogramme de la figure 3.

Les angles αb et βb sont respectivement égaux aux angles αa et βa. Ceci n'est toutefois pas obligatoire, dans la mesure où αb et βb sont supérieurs à 90°.

On définit un sommet Sb de l'angle aigu γb au point d'intersection de droites D803 et D804, représentées en pointillés, selon lesquelles s'étendent respectivement les côtés 803 et 804 du parallélogramme de la figure 3.

On note 862b une surface de l'élément principal 82 qui borde la fente 86b. On note 864b une surface de l'appendice 84b qui borde la fente 86b. Ainsi, la fente 86b est située entre les surfaces 862b et 864b. Plus précisément, les surfaces 862b et 864b bordent la fente 86b et s'étendent à partir du côté 803 de grandes dimensions de la section S de la poutre 8 et jusqu'au côté adjacent 804 de petite dimension formant un angle aigu γb avec le côté de grandes dimensions 801.

En fonctionnement, l'hydrolienne 1 est installée sous l'eau, par exemple en milieu marin, et la partie fixe 5 est reliée à un élément fixe, par exemple au sol. Les pales 4 sont entraînées en rotation autour de l'axe X1 par le flux d'eau F1 ou F2, dans un sens ou dans l'autre, ce qui actionne l'alternateur et permet la production d'énergie électrique.

Dans la suite, on décrit l'écoulement de l'eau dans le cas du flux F1. Lorsque l'eau circule dans le sens du flux F2, un écoulement symétrique apparaît.

Lorsque le flux F1 atteint l'arête A d'une poutre 8, qui constitue un bord d'attaque de la poutre 8, le flux F1 se divise en deux parties F1, et F1₂ et continue sa progression en direction de l'arête B, qui constitue un bord de fuite de la poutre 8. La première partie F1₁ du flux F1 longe la poutre 8 le long du côté 803 et la deuxième partie F1₂ du flux F1 longe la poutre 8 au niveau du côté 801.

Une zone P1 en surpression apparait au niveau de l'extrémité du côté 803 située à proximité de l'arête B, et une zone P2 en dépression apparait au niveau du côté située à proximité de l'arête B. La différence de pression qui résulte de cette surpression et de cette dépression aspire une partie F1₁' de la première partie F1₁ du flux d'eau F1 à l'intérieur de la fente 86b. L'eau s'écoule ainsi dans la fente 86b, depuis l'extrémité de la fente 86b située du côté du côté 803 jusqu'à l'extrémité de la fente 86b située du côté du côté 804, puis rejoint la deuxième partie F1₂ du flux F1 et s'écoule le long du côté 804 en direction de l'arête B. De cette manière, une couche limite d'eau s'étendant le long des côtés 801, 803 et 804 de la poutre 8 est stabilisée grâce à la fente 86b et la formation de tourbillons de Karman est limitée, voire évitée. Dans le cas du flux F1, la fente 86a est facultative et seule la fente 86b contribue à la stabilisation de l'écoulement.

La présence de deux fentes 86a et 86b situées au niveau de l'arête A et de l'arête B de la poutre 8 permet de stabiliser l'écoulement du flux F1 ou du flux F2, ce qui est avantageux dans le cas où l'hydrolienne 1 est soumise à des flux à sens variable, par exemple lorsque l'hydrolienne 1 est actionnée par le flux ou le reflux de la marée.

La figure 6 illustre un deuxième mode de réalisation de la poutre 8 dont les éléments analogues à ceux de la figure 4 portent les mêmes références.

La poutre 8 représentée à la figure 6 présente un angle αa environ égal à 130° et inférieur à l'angle αa de la poutre 8 de la figure 4. L'angle αa est supérieur à 90°.

La fente 86a de la poutre 8 de la figure 6 est située plus proche de l'arête A que la fente 86a de la poutre 8 de la figure 4. Par ailleurs, la poutre 8 de la figure 6 présente un angle βa environ égal à 130°. L'angle βa de la figure 6 supérieur à 90° et inférieur à l'angle βa de la poutre 8 de la figure 4.

La figure 7 correspond à un troisième mode de réalisation de la poutre 8 dont les éléments analogues à ceux des figures 4 et 5 portent les mêmes références. La poutre 8 représentée à la figure 7 comporte deux appendices 84a et 84a' situés tous les deux du côté de l'arête A de la poutre 8. L'appendice 84a' est plus proche de l'arête A que l'appendice 84a. Un premier espace résiduel situé entre l'élément principal 82 et l'appendice 84a définit une première fente 86a d'axe Z86a. Un deuxième espace résiduel situé entre l'appendice 84a et l'appendice 84a' définit une deuxième fente 86a' d'axe Z86a'.

Un angle αa, situé à l'extérieur de la poutre 8 et du côté de l'arête A par rapport à la fente 86a, est défini, d'une part, entre une portion 801 a du côté 801 appartenant à l'appendice 84a et, d'autre part, une portion de l'axe Z86a s'étendant vers l'extérieur de la poutre 8, au-delà du côté 801.

Un angle αa', situé à l'extérieur de la poutre 8 et du côté de l'arête A par rapport à la fente 86a', est défini, d'une part, entre une portion 801a' du côté 801 appartenant à l'appendice 84a', et, d'autre part, une portion de l'axe Z86a' s'étendant vers l'extérieur de la poutre 8, au-delà du côté 801.

Les angles αa et αa' sont égaux et les axes Z86a et Z86a' des fentes 86a et 86a' sont parallèles. Cependant, dans un autre mode de réalisation de l'invention, les angles αa et αa' peuvent être différents, dans la mesure où les fentes 86a et 86a' ne se croisent pas.

On note 862a une surface de l'élément principal 82 qui borde la fente 86a. On note 864a une surface de l'appendice 84a qui borde la fente 86a. Ainsi, la fente 86a est située entre les surfaces 862a et 864a.

On note 862a' une surface de l'appendice 84a qui borde la fente 86a'. On note 864a' une surface de l'appendice 84a' qui borde la fente 86a'. Ainsi, la fente 86a' est située entre les surfaces 862a' et 864a'.

La poutre 8 représentée à la figure 3 comporte, au niveau de chaque arête A et B, une fente 86a ou 86b, mais dans un autre mode de réalisation de l'invention, non représenté, la poutre 8 peut comporter une seule fente 86a ou 86b s'étendant entre l'élément principal 82 et un unique appendice 84a ou 84b. Dans ce cas, la fente 86a ou 86b est située au voisinage du bord de fuite de la poutre 8, c'est-à-dire du côté de l'arête B dans le cas du flux F1 ou du côté de l'arête A dans le cas du flux F2. Alors, la poutre 8 est apte à stabiliser le flux d'eau F1 ou F2 lorsque l'eau circule dans un seul sens.

Par ailleurs, dans la mesure où la fente 86a s'étend à partir du côté 801 et jusqu'au côté 802, l'axe Z86a peut être situé plus ou moins proche de l'arête A. De plus, pour le troisième mode de réalisation, la distance entre les axes Z86a et Z86a' des fentes 86a et 86a' peut être plus ou moins importante.

Selon un autre mode de réalisation de l'invention, non représenté, et dans la mesure où la poutre 8 comporte au moins une fente 86a ou 86b, la poutre 8 peut présenter, au voisinage de chacune de ses arêtes A et B, un nombre de fentes supérieur ou égal à zéro, et le nombre de fentes au niveau de chaque arête A et B de la poutre 8 peut être différent. Par exemple, l'extrémité de la poutre 8 située du côté de l'arête A peut comporter une fente 86a, et l'extrémité de la poutre 8 située du côté de l'arête B peut comporter deux fentes 86b.

Les appendices 84a et 84b étant soumis à des contraintes mécaniques plus importantes que l'élément principal 82, les appendices 84a et 84b peuvent avantageusement être constitués d'un matériau présentant une résistance mécanique supérieure à celle du matériau de l'élément principal 82. Par exemple, les appendices 84a et 84b peuvent être en acier à haute résistance, alors que l'élément principal est en acier doux, ou inversement. Dans une variante de l'invention, les appendices 84a et 84b sont creux, alors que l'élément principal 82 est plein, ou inversement.

L'hydrolienne 1 représentée à la figure 1 comporte trois poutres 8 et cinq pales 4. En variante, l'hydrolienne 1 peut comporter un nombre de poutres 8 différent de trois et un nombre de pales 4 différent de cinq.

La section d'une fente 86a, 86a' ou 86b, prise dans un plan perpendiculaire à l'axe longitudinal A8 d'une poutre 8, peut ne pas être rectiligne et, par exemple, être en forme de portion de courbe. Dans ce cas, l'axe Z86a, Z86a' ou Z86b d'une telle fente 86a, 86a' ou 86b est défini comme l'axe moyen de la portion de courbe.

Par ailleurs, les fentes 86a, 86a' et 86b peuvent s'étendre le long d'un axe longitudinal qui est incliné par rapport à l'axe longitudinal A8 de la poutre 8. Ainsi, les fentes 86a, 86a' et 86b peuvent s'étendre en étant parallèles ou quasiment parallèles à l'axe longitudinal A8 de la poutre 8. En ce sens, ces fentes sont globalement parallèles à cet axe.

Les caractéristiques des modes de réalisation et variantes envisagés ci-dessus peuvent être combinées entre elles.

En variante, la section S de la poutre 8 peut présenter une géométrie rectangulaire, le rectangle étant un parallélogramme particulier. Dans ce cas, les angles αa et αb ne sont pas des angles aigus mais des angles droits.

## Revendications

1. Poutre (8) de supportage d'un carénage (2) d'hydrolienne (1) présentant une section (S), prise perpendiculairement à un axe longitudinal (A8) de la poutre (8), en forme de parallélogramme, **caractérisée**
- **en ce qu'**elle comprend au moins une fente (86a, 86a', 86b) qui s'étend globalement parallèlement à l'axe longitudinal (A8) de la poutre (8),
- **en ce que**, dans une section (S) prise perpendiculairement à l'axe longitudinal (A8) de la poutre (8), les traces des surfaces (862a, 864a, 862a', 864a') qui bordent la fente (86a, 86a', 86b) s'étendent à partir d'un des côtés de grandes dimensions (801, 803) de la section (S) jusqu'à un côté adjacent de petites dimensions (802, 804) de la section (S).

2. Poutre (8) de supportage selon la revendication 1, **caractérisée en ce que** le côté de petites dimensions (802, 804) de la section (S) forme un angle aigu (γa, γb) avec le côté adjacent de grandes dimensions (801, 803) de la section (S).

3. Poutre (8) de supportage selon l'une des revendications 1 ou 2, **caractérisée en ce que**, dans un plan perpendiculaire à l'axe (A8) longitudinal de la poutre (8), un angle (αa, αa', αb), situé à l'extérieur de la poutre (8), du côté d'une arête (A, B) de jonction entre le côté de petites dimensions (802, 804) de la section (S) et le côté de grandes dimensions (801, 803) de la section (S) par rapport à la fente (86a, 86a', 86b), et défini entre, d'une part, une portion (801 a, 801a', 803b) du côté de grandes dimensions (801, 803), située du côté de l'arête (A, B) par rapport à la fente (86a, 86a', 86b), et, d'autre part, un axe (Z86a, Z86a', Z86b) médian ou moyen de la fente (86a, 86a', 86b), est supérieur à 90°.

4. Poutre (8) de supportage selon la revendication 3, **caractérisée en ce que** dans un plan perpendiculaire à l'axe (A8) longitudinal de la poutre (8), l'angle (αa, αa', αb), situé à l'extérieur de la poutre (8) est supérieur à 120 °, de préférence compris entre 130° et 160°, de préférence encore de l'ordre de 150°.

5. Poutre (8) selon l'une des revendications précédentes, **caractérisée en ce que** dans un plan perpendiculaire à l'axe longitudinal de poutre, un angle (βa, (βb), situé à l'intérieur de la poutre (8), et délimité par un côté de grandes dimensions (801, 803) du parallélogramme et par un côté de petites dimensions (802, 804) du parallélogramme qui forme un angle obtus (βa, βb) avec le côté de grandes dimensions (801, 803), est supérieur à 90 °, de préférence supérieur à 120 °, de préférence encore de l'ordre de 150 °.

6. Poutre (8) selon l'une des revendications précédentes, **caractérisée en ce qu'**au moins deux fentes (86a, 86a') s'étendent à partir d'un même côté de grandes dimensions (801, 803) du parallélogramme.

7. Poutre (8) selon la revendication 6, **caractérisée en ce que** les fentes (86a, 86a') qui s'étendent à partir d'un même côté de grandes dimensions (801, 803) du parallélogramme sont parallèles.

8. Poutre (8) selon l'une des revendications précédentes, **caractérisée en ce qu'**au moins une fente (86a, 86a', 86b) s'étend à partir de chaque côté de grandes dimensions (801, 803).

9. Poutre (8) selon l'une des revendications précédentes, **caractérisée en ce que** la poutre (8) est équipée de moyens de fixation pour l'assemblage de deux parties (82, 84a, 84a', 84b) de la poutre (8) situées de part et d'autre d'une même fente (86a, 86a', 86b).

10. Poutre (8) selon l'une des revendications précédentes, **caractérisée en ce qu'**au moins une partie (84a, 84a', 84b) de la poutre (8), située du côté d'une arête (A, B) de jonction entre le côté de petites dimensions (802, 804) de la section (S) et le côté de grandes dimensions (801, 803) de la section (S) par rapport à la fente (86a, 86a', 86b), est composée d'un matériau présentant une résistance mécanique supérieure à celle d'un matériau qui compose une partie (82, 84a) de la poutre (8) située à l'opposé de l'arête (A, B) par rapport à la fente (86a, 86a', 86b).

11. Hydrolienne (1) comportant une roue (3) mobile en rotation autour d'un axe (X1), un carénage fixe (2) qui entoure la roue et au moins une poutre (8) de supportage du carénage qui relie le carénage à un support central (6) de l'hydrolienne, **caractérisée en ce que** la poutre (8) de supportage est selon l'une des revendications précédentes.

## Patentansprüche

1. Träger (8) zum Unterstützen einer Verkleidung (2) eines Strömungskraftwerks (1), der einen Querschnitt (S) senkrecht zu einer Längsachse (A8) des Trägers (8) in Form eines Parallelogramms aufweist, **dadurch gekennzeichnet,**
- **dass** er wenigstens einen Schlitz (86a, 86a', 86b) aufweist, der sich im Allgemeinen parallel zu der Längsachse (A8) des Trägers (8) erstreckt, und
- **dass** sich in einem Querschnitt (S) senkrecht zu der Längsachse (A8) des Trägers (8) die Spuren der Flächen (862a, 864a, 862a', 864a'), die den Schlitz (86a, 86a', 86b) begrenzen, ausgehend von einer der Seiten mit großen Abmessungen (801, 803) des Querschnitts (S) bis zu einer benachbarten Seite mit kleinen Abmessungen (802, 804) des Querschnitts (S) erstrecken.

2. Unterstützungsträger (8) nach Anspruch 1, **dadurch gekennzeichnet, dass** die Seite mit kleinen Abmessungen (802, 804) des Querschnitts (S) mit der benachbarten Seite mit großen Abmessungen (801, 803) des Querschnitts (S) einen spitzen Winkel (γa, γb) bildet.

3. Unterstützungsträger (8) nach einem der Ansprüche 1 oder 2, **dadurch gekennzeichnet, dass** in einer Ebene senkrecht zu der Längsachse (A8) des Trägers (8) ein Winkel (αa, αa', αb), der sich außerhalb des Trägers (8) auf Seiten einer Kante (A, B) des Übergangs zwischen der Seite mit kleinen Abmessungen (802, 804) des Querschnitts (S) und der Seite mit großen Abmessungen (801, 803) des Querschnitts (S) in Bezug auf den Schlitz (86a, 86a', 86b) befindet, zwischen einerseits einem Abschnitt (801a, 801a', 803b) der Seite mit großen Abmessungen (801, 803), der sich auf Seiten der Kante (A, B) in Bezug auf den Schlitz (86a, 86a', 86b) befindet, und andererseits einer Medianoder Mittelachse (Z86a, Z86a', Z86b) des Schlitzes (86a, 86a', 86b) größer als 90° ist.

4. Unterstützungsträger (8) nach Anspruch 3, **dadurch gekennzeichnet, dass** in einer Ebene senkrecht zu der Längsachse (A8) des Trägers (8) der Winkel (αa, αa', αb), der sich außerhalb des Trägers (8) befindet, größer als 120° ist und vorzugsweise im Bereich von 130° bis 160° und stärker bevorzugt in der Größenordnung von 150° liegt.

5. Träger (8) nach einem der vorhergehenden Ansprüche, **dadurch gekennzeichnet, dass** in einer Ebene senkrecht zu der Längsachse des Trägers der Winkel (βa, βb), der sich innerhalb des Trägers (8) befindet und durch eine Seite mit großen Abmessungen (801, 803) des Parallelogramms und durch eine Seite mit kleinen Abmessungen (802, 804) des Parallelogramms begrenzt ist, die mit der Seite mit großen Abmessungen (801, 803) einen spitzen Winkel (βa, βb) bildet, größer als 90°, vorzugsweise größer als 120° und stärker bevorzugt größer als 150° ist.

6. Träger (8) nach einem der vorhergehenden Ansprüche, **dadurch gekennzeichnet, dass** sich wenigstens zwei Schlitze (86a, 86a') von derselben Seite mit großen Abmessungen (801, 803) des Parallelogramms erstrecken.

7. Träger (8) nach Anspruch 6, **dadurch gekennzeichnet, dass** die Schlitze (86a, 86a'), die sich von derselben Seite mit großen Abmessungen (801, 803) erstrecken, parallel sind.

8. Träger (8) nach einem der vorhergehenden Ansprüche, **dadurch gekennzeichnet, dass** sich wenigstens ein Schlitz (86a, 86a', 86b) von jeder Seite mit großen Abmessungen (801, 803) erstreckt.

9. Träger (8) nach einem der vorhergehenden Ansprüche, **dadurch gekennzeichnet, dass** der Träger (8) mit Befestigungsmitteln für die Zusammenfügung von zwei Teilen (82, 84a, 84a', 84b) des Trägers (8), die sich beiderseits desselben Schlitzes (86a, 86a', 86b) befinden, versehen ist.

10. Träger (8) nach einem der vorhergehenden Ansprüche, **dadurch gekennzeichnet, dass** wenigstens ein Teil (84a, 84a', 84b) des Trägers (8), der sich auf Seiten einer Kante (A, B) des Übergangs zwischen der Seite mit kleinen Abmessungen (802, 804) des Querschnitts (S) und der Seite mit großen Abmessungen (801, 803) des Querschnitts (S) in Bezug auf den Schlitz (86a, 86a', 86b) befindet, aus einem Material gebildet ist, das einen mechanischen Widerstand aufweist, der größer ist als jener eines Materials, das einen Teil (82, 84a) des Trägers (8), der sich gegenüber der Kante (A, B) in Bezug auf den Schlitz (86a, 86a', 86b) befindet, bildet.

11. Strömungskraftwerk (1), das ein um eine Achse (X1) rotatorisch bewegliches Rad (3), eine feste Verkleidung (2), die das Rad umgibt, und wenigstens einen Träger (8) für die Unterstützung der Verkleidung, die die Verkleidung mit einer Mittelstütze (6) des Strömungskraftwerks verbindet, umfasst, **dadurch gekennzeichnet, dass** der Unterstützungsträger (8) wie in einem der vorhergehenden Ansprüche definiert beschaffen ist.

## Claims

1. Strut (8) for supporting a fairing (2) for a marine turbine (1), having a cross section (S) which, when considered perpendicular to a longitudinal axis (A8) of the strut (8), is in the shape of a parallelogram, **characterized**
- **in that** it comprises at least one slot (86a, 86a', 86b) which extends globally parallel to the longitudinal axis (A8) of the strut (8),
- **in that**, in a cross section (S) considered perpendicular to the longitudinal axis (A8) of the strut (8), the surfaces (862a, 864a, 862a', 864a') which bound the slot (86a, 86a', 86b) extend from one of the long sides (801, 803) of the cross section (S) to an adjacent short side (802, 804) of the cross section (S).

2. Support strut (8) according to Claim 1, **characterized in that** the short side (802, 804) of the cross section (S) forms an acute angle (γa, γb) with the adjacent long side (801, 803) of the cross section (S) .

3. Support strut (8) according to either of Claims 1 and 2, **characterized in that**, in a plane perpendicular to the longitudinal axis (A8) of the strut (8), an angle (αa, αa', αb) which is located on the outside of the strut (8) and, with respect to the slot (86a, 86a', 86b), towards an edge (A, B), where the short side (802, 804) of the cross section (S) and the long side (801, 803) of the cross section (S) meet, and which is defined by, on one hand, a portion (801a, 801a', 803) of the long side (801, 803), located towards the edge (A, B) with respect to the slot (86a, 86a', 86b), and, on the other hand, a median or average axis (Z86a, Z86a', Z86b) of the slot (86a, 86a', 86b), is greater than 90°.

4. Support strut (8) according to Claim 3, **characterized in that**, in a plane perpendicular to the longitudinal axis (A8) of the strut (8), the angle (αa, αa', αb), located on the outside of the strut (8), is greater than 120°, preferably between 130° and 160°, more preferably of the order of 150°.

5. Strut (8) according to one of the preceding claims, **characterized in that**, in a plane perpendicular to the longitudinal axis of the strut, an angle (βa, βb), which is located on the inside of the strut (8) and is delimited by a long side (801, 803) of the parallelogram and by a short side (802, 804) of the parallelogram, and which forms an obtuse angle (βa, βb) with the long side (801, 803), is greater than 90°, preferably greater than 120°, more preferably of the order of 150°.

6. Strut (8) according to one of the preceding claims, **characterized in that** at least two slots (86a, 86a') extend from one and the same long side (801, 803) of the parallelogram.

7. Strut (8) according to Claim 6, **characterized in that** the slots (86a, 86a'), which extend from one and the same long side (801, 803) of the parallelogram, are parallel.

8. Strut (8) according to one of the preceding claims, **characterized in that** at least one slot (86a, 86a', 86b) extends from each long side (801, 803).

9. Strut (8) according to one of the preceding claims, **characterized in that** the strut (8) is equipped with attachment means for assembling two parts (82, 84a, 84a', 84b) of the strut (8) which are located on either side of one and the same slot (86a, 86a', 86b).

10. Strut (8) according to one of the preceding claims, **characterized in that** at least one part (84a, 84a', 84b) of the strut (8), which is located, with respect to the slot (86a, 86a', 86b), towards an edge (A, B) where the short side (802, 804) of the cross section (S) and the long side (801, 803) of the cross section (S) meet, consists of a material having a mechanical strength greater than that of a material which makes up one part (82, 84a) of the strut (8) located, with respect to the slot (86a, 86a', 86b), away from the edge (A, B).

11. Marine turbine (1) comprising a wheel (3) which is free to rotate about an axis (X1), a stationary fairing (2) which surrounds the wheel and at least one strut (8) for supporting the fairing which connects the fairing to a central support (6) of the marine turbine, **characterized in that** the support strut (8) is in accordance with one of the preceding claims.
